# EUROPEAN PATENT APPLICATION

(11) **EP 2 168 742 A1**
(43) Date of publication of application: **31.03.2010**
(21) Application number: 09398010.0
(22) Date of filing: 29.09.2009
(51) Int. Cl.: B28D 1/04, B23D 59/00

(54) **Stone cutting machine using a diamond disc**

(30) Priority: 29.09.2008 PT 10419508
(71) Applicant: CEI-Companhia de Equipamentos Industriais, Lda., 3700-018 S. Joao da Madeira (PT)
(72) Inventor: Antunes da Silva, Agostinho Manuel, 3700-018 S. Joao da Madeira (PT)
(74) Representative: Costa Franca, Vitor Hugo

(57) **Abstract**

Stone cutting machine using a diamond disc, with: a table of mechanical rolls (1), where the characteristics (outline, defects and shafts) of the stone are digitalised using a camera (2) and a computer (3); The distribution of the parts to be cut is optimised on the computer by means of a proper software; a conveyor belt (4), carrying the stone throughout the process; a moving system (5) for the cutting head (6) with the disc; sensors positioned on the cutting head measuring the thickness of the stone; a spreading system (10) of the separated stone parts after the first cuttings; a washing system for the cut pieces (11); an area for unloading and labelling the pieces (12) and a chipping and transportation system for depositing the waste from the stone pieces.

## Description

This invention concern a stone cutting machine using a diamond disc.

In technical terms, stone cutting machines using a diamond disc with an automatically controlled cutting head are already known. Some of these machines have a table of rolls where the distribution of the stone pieces to be cut is optimised, either by semi-automatic or manual systems. Once the stone has been moved towards the cutting area, the pieces are then cut using a disc. After having been cut, the sliced stone piece is forwarded to the unloading area. In some cases these machines also allow for the head to move perpendicularly to the stone and rotate around the vertical axle and one of the horizontal axles.

The control of the head movement is programmed from the geometries of the various pieces to be cut, taking into account: the usually irregular geometry surrounding the stone; the eventual defects on the stone and its thickness. The optimisation of the disposition of the pieces is carried out using more or less automated methods and considering a gap between the pieces ensuring that the cutting of a piece does not damage on that same piece or those surrounding it.

The inconveniences of using a semi-manual method for the optimisation of the positioning of the pieces to be cut and in obtaining control data for the cutting head are mainly related to the necessary times for its implementation.

On the other hand, the necessary gap between pieces, so that the cutting of a piece does not damage the surrounding pieces, causes waste and may inhibit the convenient concordance between the shafts of the adjacent pieces.

The cutting of the pieces originates dust and waste, which are usually removed by means of more or less automated systems. These systems are not integrated within the machine with the inconvenient of not ensuring a "serial" production, leading to higher efficiency.

The cut pieces must, as to ensure quality, be identified according to the drafts. This identification is correctly carried out through a non-automatic procedure, which is not included in the machine with the inconvenience of easily introducing mistakes.

Finally, the unloading of the pieces is usually carried out manually, with greater risk of damaging the pieces.

This invention aims at overcoming all previously mentioned inconveniences, including in the machine all systems and devices allowing for: automatic moving of the stone piece along the machine; digitalisation of the outline, defects, shafts and shades of the stone; measuring the thickness of the stone; the pieces to be cut by a disc set on a head controlled by a computer, where all data regarding the stone pieces to be cut were stored and handled; after the fist cuttings, move away the pieces so that the second cuttings are carried out without waste or damage on the adjacent pieces; moving of the disc according to the three orthogonal axles, rotation around the vertical axle and one of the horizontal axles, controlled by the computer; washing, labelling and unloading of the pieces after the cutting and chipping of the waste.

Automatic moving of the stone along the machine takes place in the first area, digitalisation of the stone by means of mechanical rolls and by a conveyor belt in the remaining areas.

The digitalisation of the outlines and defects of the stone is performed by editing the image obtained through a digital video camera. The image is edited through a process described below, so that distortions are corrected. From this image and considering the contrast between the stone and the background, the outline is digitalised following a set of coordinates with a certain gap between them. When the contrast is not sufficient, the image is stored and subsequent optimisation of the pieces is carried out by overlapping the geometry of the pieces on the image. When the defects have enough contrast, they are also digitalised by geometric figures that are limited by an outline which is identified by a set of coordinates. After creation of this defect outline, the operator may scale this same defect, classifying it within a pre-established scale.

Should the contrast not be sufficient for automatically detecting a defect, the latter may be identified and digitalised point by point onto the photograph reproduced on the screen by using the cursor. The shades and seams may also be characterised on the photograph reproduced on the screen through the method described above.

The thickness of the stone is measured in various points by mechanical or optical sensors, determining the dimensions of the stone surface. These sensors are placed on the cutting head, being the previous measurements to cutting transmitted onto the computer, influencing disc control.

The pieces are kept away from each other by a group of suction pads set on a travelling beam, which is automatically controlled.

The pieces are washed while passing from the cutting area to the unloading area by means of rotating brushes, plastic scraper and drying fan.

A label printing system shows on the screen the stone and its pieces dully located. When touching the screen on the image of each piece, the label for that piece will be issued. As a choice, information for each piece may be recorded in an electronic chip to be embedded or stuck to each piece.

The pieces at the unloading area may be automatically collected by a robot through a suction pad system.

After the pieces have been collected, the conveyor belt shall carry the waste inside a chipping system.

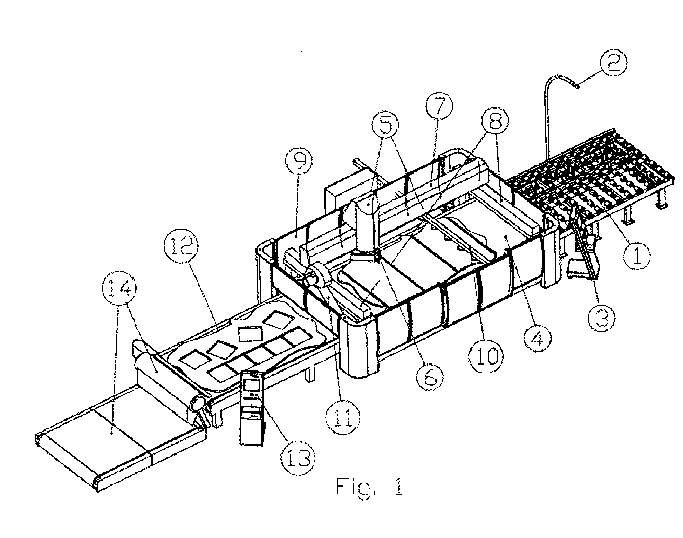

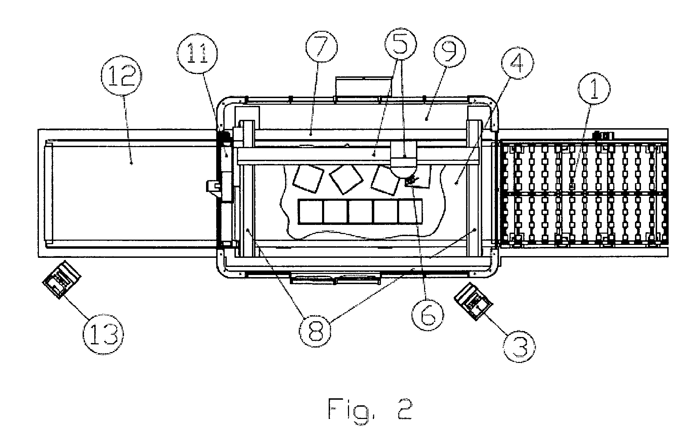

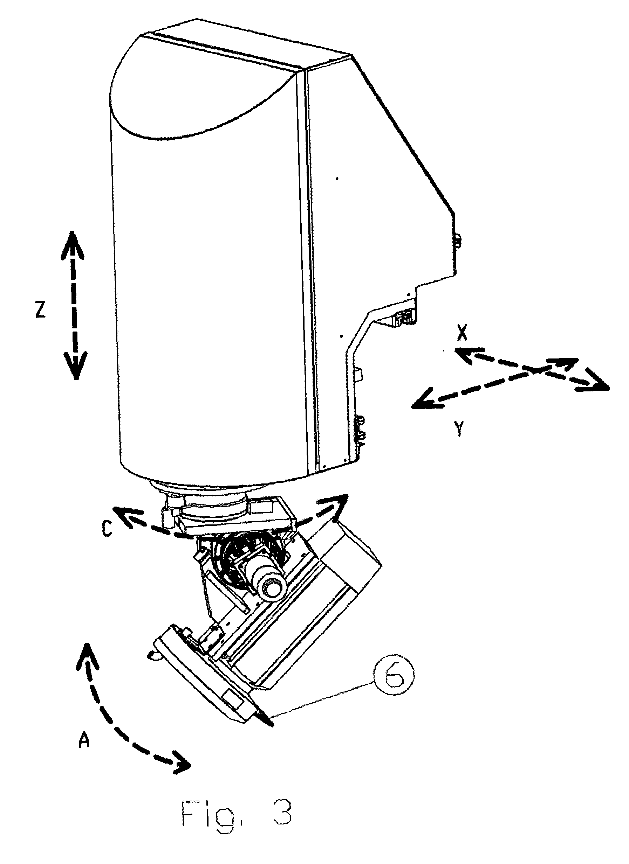

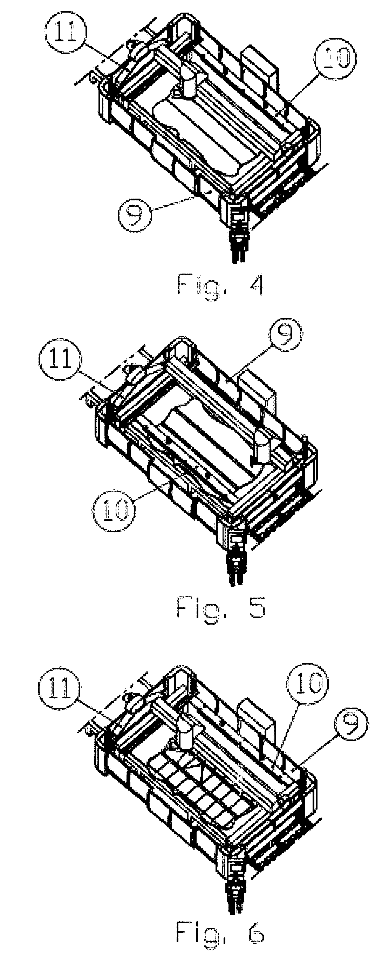

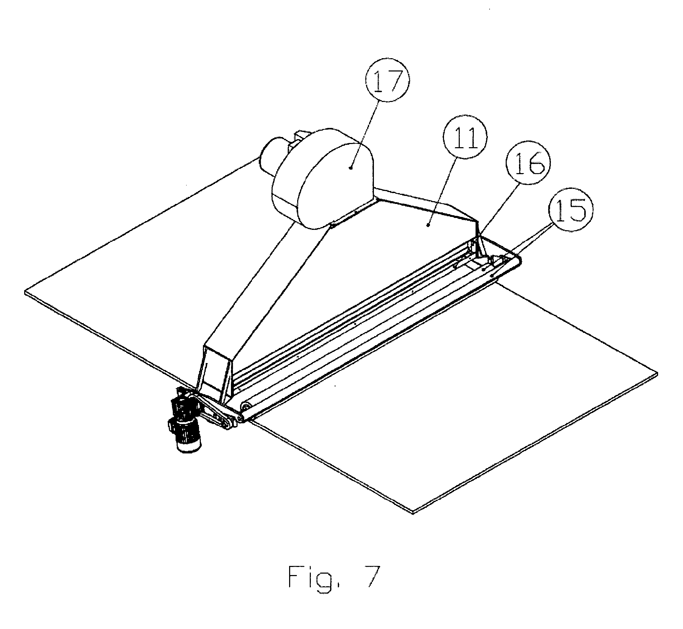

The invention is described with the help of seven figures together which, in a non-limitative way, represent:
● **Figure 1** - Schematic perspective of the stone cutting machine as invented;
● **Figure 2** - Schematic plan of the stone cutting machine as invented;
● **Figure 3** - Schematic perspective of the cutting head;
● **Figure 4** - Perspective of the cutting area with stone, being the first cuttings performed;
● **Figure 5** - Perspective of the cutting area with the various stone pieces distanced from each other throughout the first cuttings;
● **Figure 6** - Perspective of the cutting area with all the cuttings having been performed; and
● **Figure 7** - Perspective of the washing system.

The machine is formed of: a table of mechanical rolls (1), where a camera captures (2) the image of the stone; a computer (3), where the image distortions are corrected, the characteristics are digitalised (outline, defects and shafts) and the setting of the stone pieces to be cut is optimised using proper software; a conveyor belt (4), carrying the stone throughout its processing; a moving system (5) for the cutting head (6) with the disc; a deflection system (10) for the stone pieces which were separated after the first cuttings; a washing system for the stone pieces (11); an unloading and labelling area for the stone pieces (12) and a chipping system and transportation to the stone waste deposit.

From the digital video camera, (2) an image of the stone is obtained and this is stored on the computer. The image distortions are corrected by the system described on the Portuguese Patent with No. 104.188 from the claimant. The outline of the stone, defects, shafts and shades are obtained based on the image according to that mentioned on said patent. The stone characteristics are stored on the computer (3). Using proper software, the setting of the stone pieces is optimised and control data for the moving system is generated (5), along with the cutting head (6) and the deflection system (10).

After the image of the stone has been obtained, the mechanical rolls move the stone onto the conveyor belt (4) placing it at the centre of the cutting area (9). The beam (7), over which the cutting head moves, is supported by its edges on the rolling paths (8). The mechanical or optical sensors at the cutting head measure the distance to the surface of the stone and determine its thickness at various points, being this information supplied to the computer (3) and being this another necessary element for generating control data for the cutting and deflection system.

With the cutting head, using the five movements represented by the dashed arrows on Figure 3, the first cuttings follow, Figure 4. With the deflection system (10), carried out by one or more beams with suction pads moving with the support of two opposite sides of the cutting area, which may be placed transversally, Figure 1, or longitudinally, Figures 4, 5 and 6, the various stone pieces are separated as illustrated on Figure 5. The final cuttings are then performed according to Figure 6. In order to proceed with this deflection, the beam moves towards the central area of the stone part to be moved, the suction pads are lowered and stuck to that part of the stone, then the suction pads rise and the beam moves approximately 40 to 200 mm, finally the suction pads are lowered and suction is deactivated as to release the stone pieces.

The conveyor belt (4) moves the cut stone through the washing system (11). There the rotating brushes (15) and the plastic scraper (16) remove the dirt, being the pieces subjected, straight away, to air drying, at room temperature or heated up, inflated by a ventilator and air duct in the shape of a lip (17).

At the unloading area (12), labelling of the pieces is carried out using printed labels with a printing system (13). The image of the stone shows up on the screen with each piece in its respective position. When touching the screen, on the image of each piece, the respective label is issued and stuck to the piece. As a choice, information regarding each piece may be recorded on an electronic chip and embedded or stuck to it. Unloading may be carried out by a robot, not represented, formed by a suction pad system.

At the end, the conveyor belt removes the waste onto the entrance to a chipping system (14) which transforms it into more uniform and reduced pieces.

## Claims

1. Stone cutting machine using a diamond disc, formed by one area (1) with a table of mechanical rolls, where the characteristics of the stone are digitalised; another area (9) where the stone is cut and a third area (12) where the cut pieces are unloaded **characterised by** there being suspended, on the table of rolls (1) a digital video camera (2) which captures the image of the stone to be processed, connected to a computer, **by** identifying the lines that define the outline of the stone or the outlines of the areas of defect on the stone through the contrast between, respectively, the stone and the image background or between defective areas and the rest of the stone, **by** the shafts and shades being identified and classified according to a pre-established scale on the digital image of the stone using the cursor, **by** the optimisation of the setting of the pieces to be cut on the stone, using proper software, **by** the deflection system (5) of the cutting head (6) with the disc being automatically controlled by the computer (3) allowing for the disc to move within the three orthogonal directions and around the vertical axle and one of the horizontal axles, **by** having a deflection system (10) of the stone pieces which were separated after the first cuttings, **by** between the cutting area (9) and the unloading area (12) having a washing system for the pieces (11), **by** at the unloading area (12) having a computer and label printer (13) **and by** at the end of the conveyor belt (4) having a chipping system for waste (14).

2. Machine according to claim 1, **characterised by** the outline of the stone or outlines of the defects which are not identified through the contrast and identification of the shafts being digitalised point by point over the image on the computer screen using a cursor.

3. Machine according to claim 2, **characterised by** the cutting head having mechanical or optical sensors allowing for the determination of the thickness of the stone, being this information used when generating control data for the cutting head.

4. Machine according to claim 3, **characterised by** the deflection system (10) being carried out by a beam with suction pads, moving with the support of two opposite sides on the cutting area, which may be set transversally, Figure 1, or longitudinally, Figures 4,5 and 6.

5. Machine according to claim 4, **characterised by** the washing system for the pieces (11) being formed of rotating brushes (15), a plastic scraper (16) and a ventilator and air duct in the shape of a lip (17) which inflates hot air or at room temperature for drying the pieces.

6. Machine according to claim 5, **characterised by** at the unloading area (12) having a label printing system (13) formed by a screen showing the image of the stone and the cut pieces in their respective positions and by a printer issuing the label to be stuck on the piece following the order given by touching the screen on that piece.

7. Machine according to claim 5, **characterised by** at the unloading area (12) having an electronic chip recording system formed by a screen showing the image of the stone and the cut pieces in their respective positions and by a recorder issuing the chip to be embedded or stuck to the piece following the order given by touching the screen on that piece.

8. Machine according to claims 6 or 7, **characterised by** the unloading being carried out by a robot with a suction pad system.
